# EUROPÄISCHE PATENTSCHRIFT

(11) **EP 1 857 361 B1**
(45) Veröffentlichungstag und Bekanntmachung des Hinweises auf die Patenterteilung: **21.09.2016**
(21) Anmeldenummer: 07009848.8
(22) Anmeldetag: 16.05.2007
(51) Int. Cl.: B64D 13/00

(54) **KLIMAANLAGE MIT EINER REDUNDANTEN ZUFÜHRUNG VON VERSORGUNGSLUFT**
AIR CONDITIONING SYSTEM WITH A REDUNDANT AIR FEED
CLIMATISATION DOTÉE D'UNE INTRODUCTION REDONDANTE D'AIR D'APPROVISIONNEMENT

(30) Priorität: 18.05.2006 DE 102006023444
(43) Veröffentlichungstag der Anmeldung: 21.11.2007
(73) Patentinhaber: Liebherr-Aerospace Lindenberg GmbH, 88161 Lindenberg/Allgäu (DE)
(72) Erfinder: Steinmaier, Frank, 88171 Ellhofen (Weiler-Simmerberg) (DE); Maidhof, Norbert, 88178 Heimenkirch (DE)
(74) Vertreter: Laufhütte, Dieter

(56) Entgegenhaltungen:
- WO-A1-99/32358
- US-A- 3 192 848
- US-B1- 6 189 324

## Beschreibung

Die Erfindung betrifft eine Klimaanlage zum Einsatz in Flugzeugen nach dem Oberbegriff des Anspruchs 1.

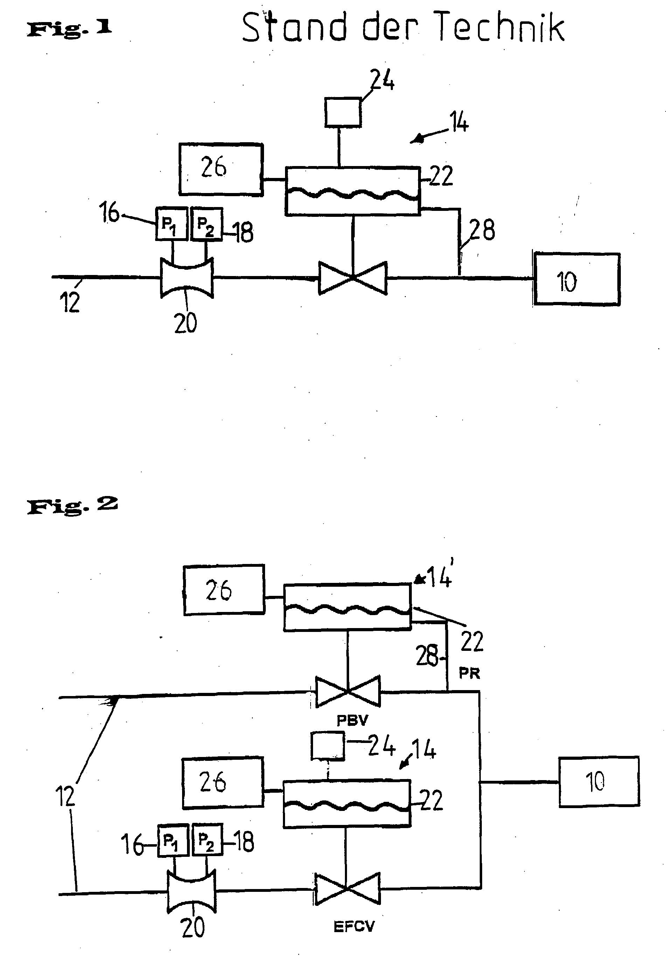

Ein Teil einer derartigen Klimaanlage nach dem Stand der Technik ist in der beigefügten Figur 1 gezeigt. Dort ist mit 10 ein sogenanntes Pack bezeichnet, in dem die Luft vor dem Einleiten in das Cockpit des Flugzeuges bzw. in den Passagierraum des Flugzeuges aufbereitet wird. Das Pack 10 wird mit sogenannter Zapfluft die vom Triebwerk abgezogen wird, versorgt. Die Zapfluft wird hierbei durch eine Leitung 12 geleitet. Zur Luftdurchsatzregelung der dem Pack zugeführten Luft dient ein Ventil 14. Nach dem vorbekannten Stand der Technik weist das Ventil 14 einen elektrischen Regler und zusätzlich einen pneumatischen Regler auf. Gemäß Fig. 1 empfängt der elektrische Regler die Signale von zwei Drucksensoren 16 und 18, die zur Aufnahme eines Druckes P1 und eines Druckes P2 in einer in der Luftleitung 12 vorgesehenen Venturidüse 20 dienen. Entsprechend dem aufgenommenen Drucksignalen wird in bekannter Art und Weise über einen auf eine Druckmembran einwirkenden Drehmomentmotor 24 der Aktivierungsdruck der Druckmembran 22 derart geregelt, dass die hier in der Fig. 1 nicht näher dargestellte Klappeneinheit des Ventils entsprechend der Regelvorgabe eingestellt wird. Mit 26 ist eine Solenoide zum Ein- bzw. Ausschalten des Ventils 14 bezeichnet. Sollte die elektrische Regelung beispielsweise aufgrund des Ausfalls der Elektrik funktionsunfähig werden, ist im Ventil 14 zusätzlich ein pneumatischer Regler realisiert. Dieser ist durch die Druckrückführleitung 28 in Fig. 1 symbolisch dargestellt.

Beim üblichen Betrieb erfolgt die Luftdurchsatzregelung ausschließlich durch den elektrischen Teil des Ventils 14. Falls dieser ausfällt, tritt anstelle der elektrischen Regelung eine pneumatische Regelung durch den Druckregelteil 28 des Ventils 14. Aufgrund dieser Maßnahme wird die Ausfallquote des Ventils gegenüber einfachen elektrischen Durchsatzregelventilen deutlich erhöht. Dennoch ist bei Verwendung derartiger Ventile festzustellen, dass in seltenen, jedoch statistisch relevanten Abständen das Ventil vollständig ausfällt. Ein Grund hierfür kann darin liegen, dass sowohl die elektrische Regelung wie auch die Druckregelung jeweils auf eine Aktuatoreinheit und eine Klappeneinheit wirken. Sollte also beispielsweise die Druckmembran 22 als Aktuatoreinheit ausfallen oder die Klappeneinheit ausfallen, kann das gesamte Pack 10 nicht mehr in gewünschtem Maße mit Luft versorgt werden und fällt vollständig aus.

In der US 2004/017739 A1 wird es nun vorgeschlagen, die Ventile zu verdoppeln, d. h. zwei unabhängig voneinander vorgesehene elektrische Durchsatzregelventile vorzusehen. Diese Ausführung ist nicht nur teuer, sondern baut groß und erhöht das Gesamtgewicht der Klimaanlage, was im Flugzeugbau von großem Nachteil ist. Eine weitere Klimaanlage für ein Luftfahrzeug ist aus der US 3,192,848 bekannt. Hier wird ein einzelnes Pack zur Luftaufbereitung über redundante Versorgunspfade versorgt, wobei in jedem Versorgungspfad ein Regelventil vorgesehen ist. Eine weitere Klimaanlage ist aus der US2005011217 bekannt.

Aufgabe der vorliegenden Erfindung ist es, die Verfügbarkeit einer Klimaanlage möglichst kostengünstig und bei möglichst geringem Gewicht der Gesamtanlage sicherzustellen.

Erfindungsgemäß wird diese Aufgabe durch die Kombination der Merkmale nach Anspruch 1 gelöst. Demnach ist eine Klimaanlage mit einer redundanten Zuführung von Versorgungsluft mit zwei Packen geschaffen, welche mit Luft versorgt werden, wobei in der Zuführung mindestens ein Ventil zur Luftdurchsatzregelung angeordnet ist. Dort ist ein elektrisches Durchsatzregelventil und ein pneumatisches Durchsatzregelventil zur Luftdurchsatzregelung in Parallelschaltung vor dem Pack angeordnet. Nach der erfindungsgemäßen Lösung sind zwei parallel verlaufende Leitungen mit zwei separaten Ventilen mit separaten Aktuator- und Klappeneinheiten geschaffen. Hierdurch kann die Gesamtverfügbarkeit des Systems sehr verbessert werden, da kein sogenannter "Common Mode"-Fehler mehr vorhanden ist. Bei dem üblicherweise zur Regelung verwendeten elektrischen Regelmode des elektrischen Durchsatzregelventils wird eine kontinuierliche Rückmeldung des Luftdurchsatzes durch die Luftdurchsatzmessung in der Luftleitung vorhandenen Venturidüse gewährleistet werden. Bei Ausfall des elektrischen Durchsatzregelventils wird das entsprechend zughörige Ventil geschlossen und es erfolgt eine pneumatische Regelung durch das pneumatische Durchsatzregelventil. Hier erfolgt also eine entsprechende Regelung, die von der elektrischen Versorgung unabhängig ist.

Bevorzugte Ausgestaltungen der Erfindung ergeben sich aus den sich an den Hauptanspruch anschließenden Unteransprüchen.

Erfindungsgemäß sind zwei parallel geschaltete Packs vorgesehen, die jeweils die erfindungsgemäße parallele Anordnung des elektrischen Durchsatzsregelventils und des pneumatischen Durchsatzregelventils aufweisen.

Gemäß einer weiteren bevorzugten Ausgestaltung der Erfindung kann vor dem Pack eine Luftbehandlungseinrichtung angeordnet sein. Bei dieser Luftbehandlungsvorrichtung kann es sich um einen Ozonkonverter handeln. Als Luftbehandlungsvorrichtung kann auch eine Einrichtung zur Beseitigung flüchtiger organischer Verbindungen vorgesehen sein. Diese flüchtigen organischen Verbindungen, beispielsweise Kerosin, führen zu Geruchsbelästigungen, zu deren Beseitigung diese Einrichtung dient. Die Einrichtung für die Beseitigung der flüchtigen organischen Verbindungen kann gesondert als Luftbehandlungseinrichtung vorgesehen sein. Alternativ kann sie auch in den Ozonkonverter integriert sein.

Gemäß einer Ausführungsvariante der Erfindung kann die Luftzuführleitung für das pneumatische Durchsatzregelventil an der Luftbehandlungseinrichtung vorbeigeführt werden.

Eine andere Ausführungsvariante der Erfindung beinhaltet, dass die Luftzuführleitung für das pneumatische Durchsatzventil in Strömungsrichtung nach der Luftbehandlungseinrichtung abzweigt.

Vorteilhaft kann das pneumatische Durchsatzregelventil den Luftdurchsatz in Abhängigkeit vom Durchströmungswiderstand des Packs auf ein vorher festgelegtes Druckniveau regeln.

Weitere Einzelheiten und Vorteile der Erfindung werden anhand eines in der Zeichnung dargestellten Ausführungsbeispiels näher erläutern. Es zeigen:
- Fig. 1:: ein schematisches Systemschema nach dem Stand der Technik,
- Fig. 2:: ein schematisches Systemschema nach einer ersten Ausführungsform der vorliegenden Erfindung und
- Fig. 3:: eine schematische Darstellung eines Gesamtsystems, in dem ein Ausführungsbeispiel der Erfindung integriert ist.

In Fig. 2 ist schematisch ein System eines Teil der Klimaanlage gezeigt, in welcher zwei parallele Zapfluftleitungen 12 jeweils Regelventile 14 bzw. 14' aufweisen. Das Regelventil 14 ist ein elektrisches Durchsatzregelventil EFCV üblicher Bauart. Hier ist in der Zapfluftleitung eine Venturidüse 20 mit einem ersten Drucksensor 16 zur Aufnahme des Drucks P1 und einem zweiten Drucksensor 18 zur Aufnahme des Drucks P2 enthalten, um hier eine kontinuierliche Durchflussmessung zu ermöglichen. Entsprechend dieser kontinuierlichen Durchflussmessung wird über den Drehmomentmotor 24 der die Druckmembran 22 steuernde Druck eingestellt. Über die Druckmembran 22 wird die Klappeneinheit des Ventils (hier nicht dargestellt) eingestellt. Sollte das elektrische Durchsatzregelventil EFCV ausfallen, wird die Klappeneinheit geschlossen. Gleichzeitig wird das pneumatische Durchsatzregelventil geöffnet. Dieses weist genau wie das elektrische Durchsatzregelventil eine Aktuator- und eine Klappeneinheit auf. Als Aktuator dient auch hier eine Druckmembran, die allerdings pneumatisch geregelt wird. Diese pneumatische Regelung erfolgt auch in an sich bekannter Weise durch die Regelung auf ein definiertes Druckniveau, wobei sich hier der Luftdurchsatz aufgrund des Widerstands des Packs 10 ergibt.

An beide Aktuatoreinheiten 22 ist eine Ein/Aus-Solenoide angeschlossen, über die das jeweilige Regelventil 14 bzw. 14' aktivierbar bzw. ausschaltbar ist.

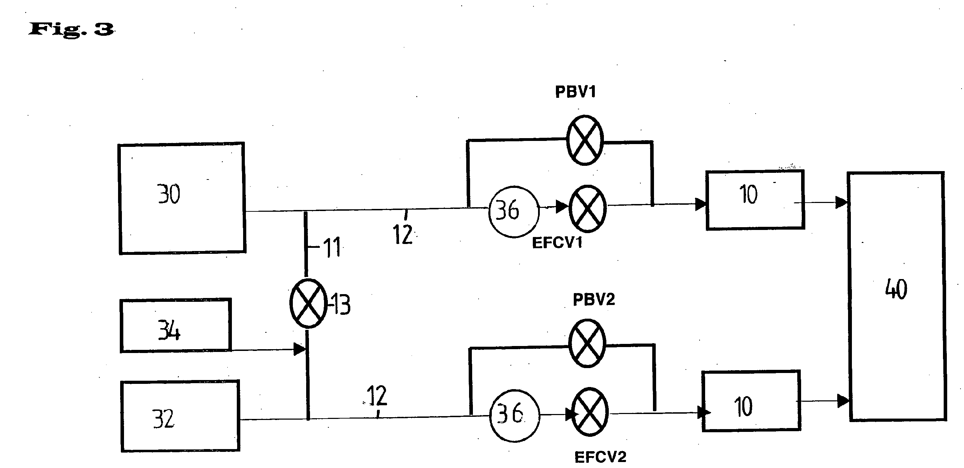

In Fig. 3 ist ein Gesamtkonzept eines Teils einer Flugzeugklimaanlage gezeigt. Hier sind zwei Zapfluftsysteme 30 und 32 vorgesehen. Mittels entsprechender Leitungen 12 wird die Zapfluft den jeweiligen Packs 10 zugeführt. Mit 34 ist eine sogenannte APU bezeichnet, die zur Luftversorgung am Boden dient. Die beiden Luftleitungen 12 sind über eine Verbindungsleitung 11 miteinander verbunden, wobei diese Verbindungsleitung über ein X-Zapfluftventil 13 geöffnet bzw. verschlossen werden kann.

Der entsprechend im Pack behandelte Luftstrom wird in eine gemeinsame Mischkammer 40 eingeleitet.

Den jeweiligen Packs 10 sind jeweils ein elektrisches Durchsatzregelventil und ein pneumatisches Durchsatzregelventil vorgeschaltet. Wie aus dem Anlagenschema gemäß Fig. 3 weiter ersichtlich, ist dem elektrischen Durchsatzregelventil jeweils eine Ozonkonvertierung 36 vorgeschaltet. Im Normalfall wird mittels des Zapfluftsystems 30 das erste Pack 10 versorgt, während mit dem Zapfluftsystem 32 das zweite Pack 10 versorgt wird. Das X-Zapfluftventil 13 bleibt geschlossen. Dagegen wird das X-Zapfluftsystem 13 in dem Fall geöffnet, wenn eines der Zapfluftsysteme 30 oder 32 ausfällt bzw. wenn auf den sogenannten APU-Betrieb durch die APU-Einheit 34 umgeschaltet wurde. Gemäß dem System sind zwei unterschiedliche Betriebsmodi für die Regelung des Luftdurchsatzes verwirklicht: ein elektrischer Betriebsmodus und ein pneumatischer Betriebsmodus. Diese Betriebsmodi sind in zwei unterschiedlichen Ventilen verwirklicht, so dass diese Regeleinheit redundant aufgebaut ist.

## Patentansprüche

1. Klimaanlage mit einer redundanten Zuführung von Versorgungsluft mit zwei parallelgeschaltete Packen (10), die mit Luft versorgt werden, wobei in jeder Zuführung mindestens ein Ventil (14) zur Luftdurchsatzregelung angeordnet ist,
**dadurch gekennzeichnet,**
**daß** ein elektrisches Durchsatzregelventil (EFCV) und ein pneumatisches Durchsatzregelventil (PBV) zur Luftdurchsatzregelung in Parallelschaltung vor jedem Pack (10) angeordnet sind.

2. Klimaanlage nach Anspruch 1, **dadurch gekennzeichnet, daß** im Betrieb der Luftdurchsatz zur Versorgung des Packs (10) ausschließlich durch das elektrische Durchsatzregelventil (EFCV) regelbar ist.

3. Klimaanlage nach Anspruch 1 oder 2, **dadurch gekennzeichnet, daß** bei Ausfall des elektrischen Durchsatzregelventils (EFCV) der Luftdurchsatz zur Versorgung des Packs (10) durch das pneumatische Durchsatzregelventil (PBV) regelbar ist.

4. Klimaanlage nach einem der Ansprüche 1 bis 3, **dadurch gekennzeichnet, daß** der Luftdurchsatz durch das elektrische Durchsatzregelventil (EFCV) über Druckmessungen in einer in der Leitung vorgesehenen Venturidüse (20) kontinuierlich meßbar ist.

5. Klimaanlage nach einem der Ansprüche 1 bis 4, **dadurch gekennzeichnet, dass** dem elektrischen Durchsatzregelventil (EFCV) eine Luftbehandlungseinrichtung vorgeschaltet ist.

6. Klimaanlage nach Anspruch 5, **dadurch gekennzeichnet, dass** die Luftbehandlungseinrichtung ein Ozonkonverter (36) ist.

7. Klimaanlage nach Anspruch 5, **dadurch gekennzeichnet, dass** die Luftbehandlungseinrichtung eine Einrichtung zur Beseitigung flüchtiger organischer Verbindungen ist.

8. Klimaanlage nach einem der Ansprüche 5 bis 7, **dadurch gekennzeichnet, dass** die Luftzuführleitung für das pneumatische Durchsatzregelventil (PBV) an der Luftbehandlungseinrichtung vorbeigeführt wird.

9. Klimaanlage nach einem der Ansprüche 5 bis 7, **dadurch gekennzeichnet, dass** die Luftzuführleitung für das pneumatische Durchsatzventil (PBV) in Strömungsrichtung nach der Luftbehandlungseinrichtung abzweigt.

10. Klimaanlage nach einem der Ansprüche 1 bis 9, **dadurch gekennzeichnet, dass** das pneumatische Durchsatzregelventil (PBV) in Abhängigkeit vom Durchströmungswiderstand des Packs (10) auf ein vorher festgelegtes Druckniveau regelt.

## Claims

1. An air-conditioning system with a redundant feed of supply air comprising two packs (10) connected in parallel which are supplied with air, with at least one valve (14) being arranged in each feed for air flow control,
**characterized in that**
an electrical flow control valve (EFCV) and a pneumatic flow control valve (PBV) are arranged for air flow control in a parallel connection in front of each pack (10).

2. An air-conditioning system in accordance with claim 1, wherein the air flow for the supply of the pack (10) can only be controlled by the electrical flow control valve (EFCV) in operation.

3. An air-conditioning system in accordance with either of claims 1 or 2, wherein on a failure of the electrical flow control valve (EFCV), the air flow for the supply of the pack (10) can be controlled by the pneumatic flow control valve (PBV).

4. An air-conditioning system in accordance with one of the claims 1 to 3, wherein the air flow through the electrical flow control valve (EFCV) can be measured continuously via pressure measurements in a Venturi nozzle (20) provided in the line.

5. An air-conditioning system in accordance with one of the claims 1 to 4, wherein an air treatment device is connected in front of the electrical flow control valve (EFCV).

6. An air-conditioning system in accordance with claim 5, wherein the air treatment device is an ozone converter (36).

7. An air-conditioning system in accordance with claim 5, wherein the air treatment device is a device for the elimination of volatile organic compounds.

8. An air-conditioning system in accordance with one of the claims 5 to 7, wherein the air feed line for the pneumatic flow control valve (PBV) is led past the air treatment device.

9. An air-conditioning system in accordance with one of the claims 5 to 7, wherein the air feed line for the pneumatic flow valve (PBV) branches off after the air treatment device in the flow direction.

10. An air-conditioning system in accordance with one of the claims 1 to 9, wherein the pneumatic flow control valve (PBV) controls to a previously fixed pressure level in dependence on the flow resistance of the pack (10).

## Revendications

1. Climatisation dotée d'une alimentation redondante d'air d'approvisionnement comprenant deux groupes (10) branchés en parallèle, qui sont approvisionnés en air, au moins une vanne (14) destinée à la régulation du débit d'air étant disposée dans chaque alimentation,
**caractérisée en ce que**
une vanne de régulation électrique de débit (EFCV) et une vanne de régulation pneumatique de débit (PBV) sont disposées avant chaque groupe (10) en montage parallèle pour la régulation du débit d'air.

2. Climatisation selon la revendication 1, **caractérisée en ce que**, pendant le fonctionnement, le débit d'air pour l'approvisionnement du groupe (10) peut être réglé uniquement par la vanne de régulation électrique de débit (EFCV).

3. Climatisation selon la revendication 1 ou 2, **caractérisée en ce que**, en cas de panne de la vanne de régulation électrique de débit (EFCV), le débit d'air pour l'approvisionnement du groupe (10) peut être réglé par la vanne de régulation pneumatique de débit (PBV).

4. Climatisation selon l'une des revendications 1 à 3, **caractérisée en ce que** le débit d'air traversant la vanne de régulation électrique de débit (EFCV) peut être mesuré en continu par le biais de mesures de la pression dans un tube de Venturi (20) prévu dans la conduite.

5. Climatisation selon l'une des revendications 1 à 4, **caractérisée en ce qu'**un dispositif de traitement de l'air est branché en amont de la vanne de régulation électrique de débit (EFCV).

6. Climatisation selon la revendication 5, **caractérisée en ce que** le dispositif de traitement de l'air est un convertisseur d'ozone (36).

7. Climatisation selon la revendication 5, **caractérisée en ce que** le dispositif de traitement de l'air est un dispositif d'élimination de composés organiques volatils.

8. Climatisation selon l'une des revendications 5 à 7, **caractérisée en ce que** la conduite d'alimentation en air pour la vanne de régulation pneumatique de débit (PBV) by-passe le dispositif de traitement de l'air.

9. Climatisation selon l'une des revendications 5 à 7, **caractérisée en ce que** la conduite d'alimentation en air pour la vanne de régulation pneumatique de débit (PBV) bifurque après le dispositif de traitement de l'air dans la direction d'écoulement.

10. Climatisation selon l'une des revendications 1 à 9, **caractérisée en ce que** la vanne de régulation pneumatique de débit (PBV) régule à un niveau de pression prédéfini en fonction de la résistance à l'écoulement du groupe (10).
